# EUROPEAN PATENT APPLICATION

(11) **EP 1 623 814 A2**
(43) Date of publication of application: **08.02.2006**
(21) Application number: 05016300.5
(22) Date of filing: 27.07.2005
(51) Int. Cl.: B29C 59/00, B29C 69/02, B60R 21/20

(54) **Method for manufacturing airbag cover**

(30) Priority: 06.08.2004 JP 2004230705
(71) Applicant: TAKATA CORPORATION, Minato-ku, Tokyo 106-8510 (JP)
(72) Inventor: Sejima, Naoki, Minato-ku Tokyo 106-8510 (JP)
(74) Representative: Vossius & Partner

(57) **Abstract**

A method for reasonably manufacturing an airbag cover used for covering a vehicle airbag is provided.

A method for manufacturing an airbag cover includes a molding step (step S10) for forming a molded airbag-cover body 101 including an integrated combination of a top panel and a container; and a tearing-line formation step (step S12) for post-processing the molded airbag-cover body 101 obtained in the molding step in order to form a tearing line having a depth less than a panel thickness of the top panel (Fig. 4).

## Description

The present invention relates to methods for manufacturing airbag covers used for covering vehicle airbags.

A typical airbag cover installed in a vehicle cabin of, for example, an automobile is provided with a box-shaped container portion disposed on a reverse face of a top-panel portion having a flat-plate-like structure. A preliminarily-folded vehicle airbag is housed in this container portion so that the airbag cover covers a side of the vehicle airbag proximate a vehicle occupant.
JP 2002-12116 A, for example, discloses a method for manufacturing an airbag cover in which the top-panel portion and the box-shaped container portion are joined together by welding. However, with respect to an airbag cover of this type having the box-shaped container portion disposed on the reverse face of the flat-plate-like top-panel portion, it is in great demand that the airbag cover can be manufactured in a more reasonable manner.

In view of these circumstances, the object of the present invention is to provide a method for reasonably manufacturing an airbag cover used for covering a vehicle airbag.

In order to achieve the above-mentioned object, the present invention provides a method that can be applied to various types of vehicles, such as automobiles, trains, motorcycles (straddle-type vehicles), aircrafts, and watercrafts.

### (First aspect of the present invention)

According to a first aspect of the present invention, a method for manufacturing an airbag cover is provided as set forth in claim 1. This method for manufacturing the airbag cover relates to manufacturing of an airbag cover that includes at least a top panel, a container, and a linear groove. The top panel has a plate-like structure that-covers a vehicle airbag from a vehicle-cabin side, the vehicle airbag being installed in a vehicle and provided for protecting a vehicle occupant subject to protection. This top panel is generally mounted on an instrument panel of a vehicle or on a driver seat. The container is disposed on a reverse face of the top panel and is provided for housing the vehicle airbag. The container is generally provided with walls that protrude outward from the reverse face. In a state where the airbag cover is installed in the vehicle, a side of the top panel facing the vehicle-cabin side is defined as the front side, meaning that the reverse face defines the back side of the top panel. As an alternative to a type of a container that has the capability to house the vehicle airbag by itself, another type of a container may be permissible in which a retainer housing the vehicle airbag is attached to the container via an attachment member, such as a bracket, such that the container partially or entirely houses the vehicle airbag. The linear groove has a depth less than a panel thickness of the top panel and is formed within a region defined by the container. This linear groove has a panel thickness relatively smaller than that in the other sections of the top panel. Consequently, when the vehicle airbag is being inflated, the top panel can be ripped open along the linear groove so as to allow the vehicle airbag to be deployed over an occupant-protection area. The linear groove is thus designated as a tearing line.

The method for manufacturing the airbag cover according to the present invention includes at least a molding step and a groove-forming step. The molding step is for forming a molded airbag-cover body including an integrated combination of the top panel and the container. Generally, a resin material for forming the top panel and the container is poured into a mold, whereby the molded airbag-cover body including the integrated combination of the top panel and the container can be obtained. On the other hand, the groove-forming step is for post-processing the molded airbag-cover body obtained in the molding step in order to form the linear groove. Generally, in the groove-forming step, the linear groove is post-processed in the molded airbag-cover body by an ultrasonic cutting technique or a laser cutting technique. Where necessary, in the present invention, additional steps may be performed prior to the molding step, between the molding step and the groove-forming step, and after the groove-forming step.

By applying the method for manufacturing the airbag cover as set forth in!claim 1 to form the airbag cover including at least the top panel, the container, and the linear groove, the top panel and the container can be molded in an integrally-combined manner. Consequently, this achieves reasonable manufacturing of the airbag cover. Specifically, this manufacturing process of the airbag cover achieves a less number of components and manufacturing steps and a simplified production control, thus contributing to less time and lower costs (i.e. costs required for manufacture, quality control, and development). Furthermore, regarding the finished product of the airbag cover, in comparison with an airbag cover in which the top panel and the container are formed separately and are then joined together by, for example, welding, the airbag cover with the integrated combination of the top panel and the container contributes to a better appearance in the bordering section between the top panel and the container; a higher stability of the top panel due to the integrated junction between the top panel and the container; a lighter product weight of the entire airbag cover; and a stronger junction between the top panel and the container. Such an airbag cover having high strength in the junction between the top panel and the container is advantageous especially for a vehicle airbag whose inflation force is very large. Furthermore, since the molded airbag-cover body having the integrated combination of the top panel and the container has a higher rigidity and is thus less deformable in comparison with a single separate top-panel, the molded airbag-cover body can be readily post-processed to form, for example, the linear groove.

### (Second aspect of the present invention)

A second aspect of the present invention corresponds to the method for manufacturing the airbag cover as set forth in claim 2. Specifically, according to this method, the linear groove is preferably formed by ultrasonic machining using ultrasonic machining means in the groove-forming step in the method for manufacturing the airbag cover according to claim 1. The definition "ultrasonic machining means" includes a wide variety of means that enables the formation of the linear groove by ultrasonic machining. Such means is mainly a blade-like ultrasonic machining member, but may include other types of ultrasonic machining members that have, for example, a rod-like structure or a plate-like structure. For example, by applying an ultrasonic machining blade (ultrasonic machining means) receiving an ultrasonic wave onto the top panel and controlling the movement of the ultrasonic machining blade using a machining robot, the linear groove can be formed along a desired path on the top panel.

In the method for manufacturing the airbag cover as set forth in claim 2, the machining rate using, for example, the ultrasonic machining blade is higher than that using general laser machining. For this reason, this effectively leads to higher productivity of the airbag cover. Moreover, since a general-purpose device can be used for the ultrasonic machining operation, equipment costs can be kept lower than using laser machining facilities that usually require a dedicated device. Furthermore, with respect to the size reduction of an ultrasonic machining device, even if the section where the linear groove is to be formed is close to the walls of the container, the linear groove can still be accurately formed into a desired shape.

As described above, the present invention provides a specific step for integrally molding a top panel and a container included in an airbag cover so that the airbag cover can be manufactured in a reasonable manner.
Fig. 1 is a perspective view illustrating a reverse face of an airbag cover 100 according to an embodiment.
Fig. 2 is a plan view illustrating the reverse face of the airbag cover 100 according to the embodiment.
Fig. 3 is a cross-sectional view illustrating a state where the airbag cover 100, a vehicle airbag 130, and a retainer 140 according to the embodiment, for example, are installed in a vehicle.
Fig. 4 illustrates the steps for manufacturing the airbag cover 100 according to the embodiment.
Fig. 5 is a perspective view of a molded airbag-cover body 101 obtained by a molding step (step S10) shown in Fig. 4.
Fig. 6 is a perspective view illustrating a tearing-line formation step (step S12) shown in Fig. 4, in which a tearing line 113 is being formed in the molded airbag-cover body 101 by using an ultrasonic machining device 200.

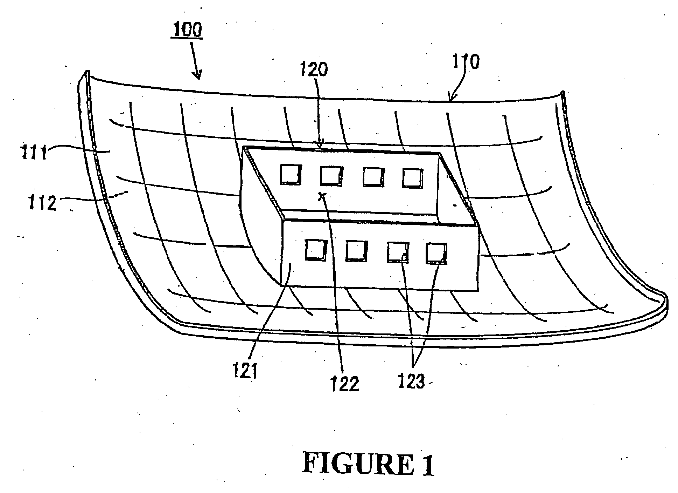

Embodiments will now be described with reference to the drawings. First, an airbag cover 100 according to an embodiment of the present invention will be described with reference to Figs. 1 to 3. The airbag cover 100 is to be installed in a vehicle cabin of an automobile at a position in front of a passenger seat that seats a vehicle occupant.

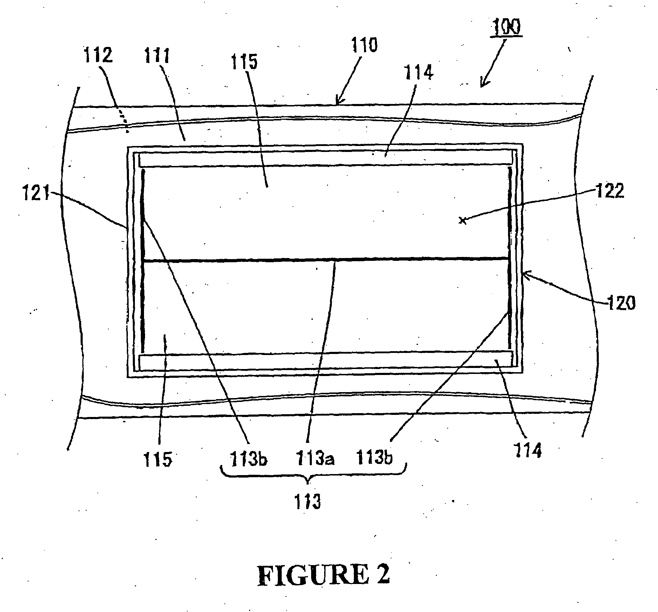

Fig. 1 is a perspective view illustrating a reverse face of the airbag cover 100 according to this embodiment. Fig. 2 is a plan view illustrating the reverse face of the airbag cover 100.

As shown in Figs. 1 and 2, the airbag cover 100 according to this embodiment is for covering a vehicle airbag in a vehicle (i.e. a vehicle airbag 130 which will be described later) from a vehicle-cabin side. The airbag cover 100 mainly includes a three-dimensional top panel 110 and a box-shaped container 120. The top panel 110 and the container 120 are formed of a resin material, such as polypropylene (PP) and olefin elastomer (TPO).

The top panel 110 has a reverse face 111 on which the container 120 is integrally provided. When the airbag cover 100 is installed in the vehicle, a front side of the top panel 110 (i.e. a front face 112 shown in Fig. 1) faces the vehicle-cabin side, namely, a side proximate a vehicle occupant subject to protection. This means that the reverse face 111 defines a back side of the top panel 110. Consequently, the reverse face 111 of the top panel 110 also acts as the reverse face of the airbag cover 100. Moreover, the reverse face 111 of the top panel 110 has a segmental region defined by the container 120, and in this segmental region, a tearing line (i.e. a tearing line 113 shown in Fig. 2) is provided. The top panel 110 corresponds to the "top panel" according to the present invention.

The tearing line 113 provided in the top panel 110 has a thin profile for allowing the airbag cover 100 to deploy when the vehicle airbag is being inflated. In this embodiment, the tearing line 113 is defined by a linear groove provided in the reverse face 111 of the top panel 110. In detail, the tearing line 113 is defined by a linear thin-profile section whose panel thickness is relatively smaller than that of other sections of the top panel 110. As shown in Fig. 2, the tearing line 113 is a combination of one line of first linear-groove segment 113a and two lines of second linear-groove segments 113b, 113b in plan view, such that the combination forms a substantially H-shape in plan view. The first linear-groove segment 113a extends linearly in the horizontal direction in Fig. 2, whereas the second linear-groove segments 113b extend linearly in the vertical direction in Fig. 2 (that is, in a direction perpendicular to the extending direction of the first linear-groove segment 113a) at two respective opposite ends of the first linear-groove segment 113a. The tearing line 113 corresponds to the "linear groove having a depth less than a panel thickness of the top panel" according to the present invention.

Furthermore, the reverse face 111 of the top panel 110 is provided with long hinges 114, 114 respectively adjacent to opposite ends of the second linear-groove segments 113b, such that the hinges 114, 114 extend parallel to each other along the first linear-groove segment 113a. The hinges 114, 114 are defined by thin-profile sections (i.e. depressed sections) with respect to the thickness direction of the top panel 110. The hinges 114 and the tearing line 113 define a pair of deployment doors 115, 115 in the top panel 110. The top panel 110 is ripped open along the tearing line 113 when the vehicle airbag is being inflated, and thus forms the pair of deployment doors 115, 115. The pair of deployment doors 115, 115 is deployable in a rotatable manner about the corresponding hinges 114.

The container 120 is provided with a supporting portion 121 protruding outward from the reverse face 111 of the top panel 110. The supporting portion 121 defines a container space 122 which functions as a space for housing the vehicle airbag (i.e. the vehicle airbag 130 which will be described later). Moreover, the walls of the supporting portion 121 are provided with a plurality of rectangular holes 123. When a retainer 140, which will be described later, is to be attached to the container 120, hook members 142 of the retainer 140 are hooked onto these holes 123. The container 120 corresponds to the "container" according to the present invention, and the vehicle airbag 130 housed in the container 120 corresponds to the "vehicle airbag" according to the present invention.

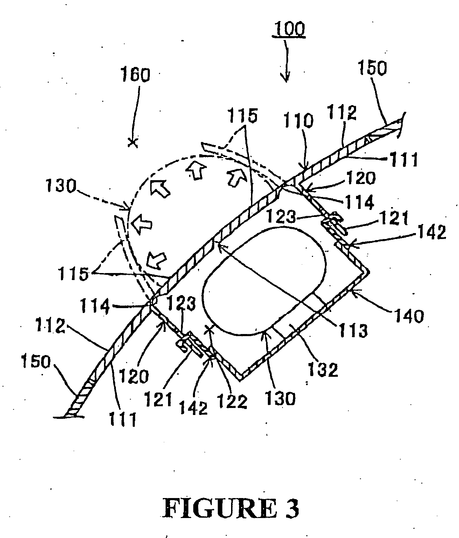

Fig. 3 is a cross-sectional view illustrating a state where the airbag cover 100, the vehicle airbag 130, and the retainer 140, for example, are installed in the vehicle.

In a state where the retainer 140 housing, for example, the vehicle airbag 130 and an inflator 132 is attached to the container 120 as shown in Fig. 3, the airbag cover 100 is mounted on an instrument panel 150. In detail, the retainer 140 has the hook members 142 fixed thereon, and by hooking these hook members 142 onto the holes 123 provided in the supporting portion 121 of the container 120, the retainer 140 is attached to the container 120. The retainer 140 has the capability to house the vehicle airbag 130 folded up in a predetermined manner, such as in a rolled-up manner or in an accordion-like manner. On the other hand, the inflator 132 is built in the retainer 140 and functions as a gas supplier for supplying the vehicle airbag 130 with inflation gas. In the state where the retainer 140 is attached to the container 120 via the hook members 142 (i.e. the state shown in Fig. 3), the vehicle airbag 130 housed in the retainer 140 is also housed in the container space 122 of the container 120.

According to the airbag cover 100 shown in Fig. 3, when the vehicle is involved in an accident, the inflation gas generated in the inflator 132 is sent to the vehicle airbag 130. The inflation force of the vehicle airbag 130 rips open the top panel 110 along the tearing line 113 so that the pair of deployment doors 115, 115 becomes deployed about the corresponding hiriges 114 towards the front face 112 in a double-opening manner (double-swinging manner). The pair of deployment doors 115, 115 is deployed in a manner shown in, for example, Fig. 3 with double-dashed lines. The vehicle airbag 130 passes through an opening formed by the deployed pair of deployment doors 115, 115 so as to inflate outward towards an occupant-protection area 160. Accordingly, this achieves a thorough protection of a vehicle occupant positioned in the occupant-protection area 160.

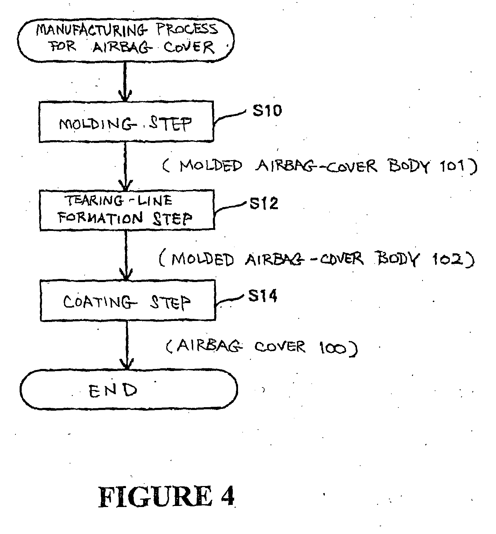

A method for manufacturing the airbag cover 100 will now be described with reference to Figs. 4 to 6.

Fig. 4 illustrates the steps for manufacturing the airbag cover 100 according to this embodiment. As shown in Fig. 4, the method for manufacturing the airbag cover 100 according to this embodiment mainly includes a molding step (step S10); a tearing-line formation step (step S12); and a coating step (step S14). Additionally, a step related with preprocessing is performed before the molding step (step S10), and steps related with finishing and inspecting of the product are performed after the coating step (step S14).

### (Molding step)

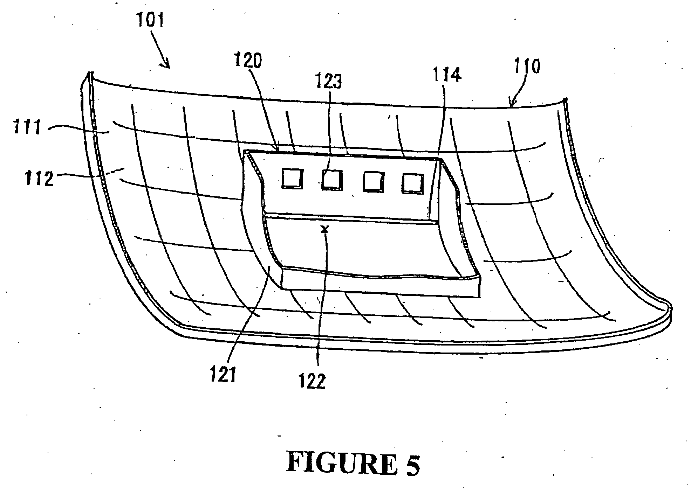

First, a molding process is performed in step S10 shown in Fig. 4. This molding process is for forming a molded airbag-cover body (i.e. a molded airbag-cover body 101 shown in Fig. 5) by integral molding so that the molded airbag-cover body 101 includes an integrated combination of the top panel 110 for covering the vehicle airbag 130 from the vehicle-cabin side, and the container 120 for housing the vehicle airbag 130. The molded airbag-cover body 101 obtained by this molding process is a molded body in which the tearing line 113 is not formed yet. For this molding process, a typical molding unit is used in which a resin material for forming the top panel 110 and the container 120 is poured into a mold, whereby the molded airbag-cover body 101 including the integrated combination of the top panel 110 and the container 120 can be formed. The molding process of step S10 for forming the molded airbag-cover body 101 corresponds to the "molding step for forming a molded airbag-cover body including an integrated combination of the top panel and the container" according to the present invention.

### (Tearing-line formation step)

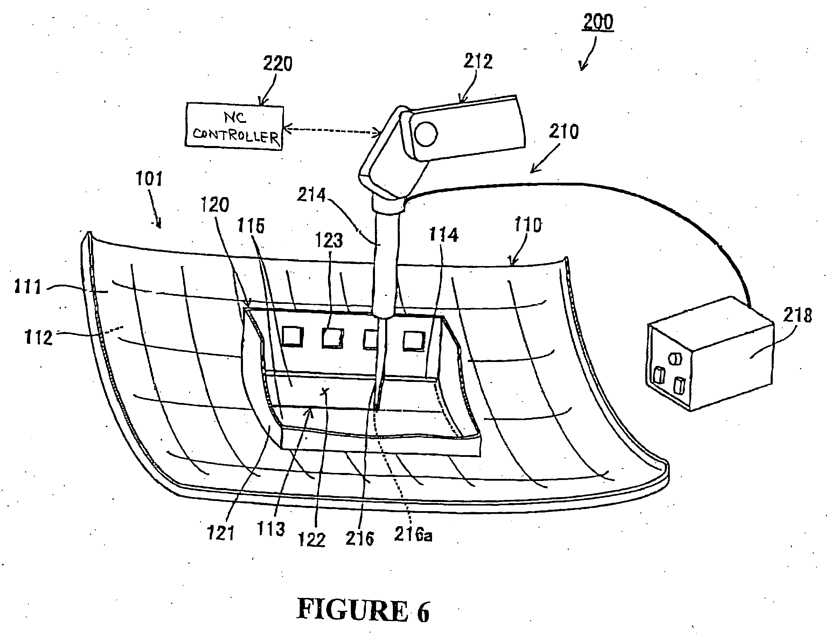

After step S10, a tearing-line formation process is performed in step S12 shown in Fig. 4. The tearing-line formation process is for post-processing the molded airbag-cover body 101 obtained in the molding process of step S10 in order to form the tearing line 113 by using an ultrasonic machining device 200 shown in Fig. 6. The tearing-line formation process shown in step S12 corresponds to the "groove-forming step for post-processing the molded airbag-cover body obtained in the molding step in order to form the linear groove". Fig. 6 illustrates the state where the tearing line 113 is being formed using the ultrasonic machining device 200 in this tearing-line formation process.

As shown in Fig. 6, the ultrasonic machining device 200 according to this embodiment mainly includes a drive unit 210 and an NC controller 220. The drive unit 210 is mainly provided with a drive arm 212, an ultrasonic transducer 214, an ultrasonic machining blade 216, and an ultrasonic generator 218. The drive arm 212 is a part of a machining robot and is controlled based on an input signal from the NC controller 220 such that the drive arm 212 adjusts the positioning of a blade tip 216a of the ultrasonic machining blade 216. The ultrasonic transducer 214 transmits an ultrasonic wave generated by the ultrasonic generator 218 to the ultrasonic machining blade 216. The ultrasonic machining blade 216 employed may be a type in which the cutting width of the blade tip 216a is, for example, 1 mm. The ultrasonic machining blade 216 corresponds to the "ultrasonic machining means" according to the present invention. Alternatively, instead of a blade-like ultrasonic machining member like the ultrasonic machining blade 216 in this embodiment, other types of shapes are permissible for the ultrasonic machining member as long as a workpiece can be machined by transmitting (applying) an ultrasonic wave to the workpiece. For example, the ultrasonic machining member may have a rod-like structure or a plate-like structure. The NC controller 220 is for processing machining-data used for forming the tearing line 113 on the reverse face 111 of the top panel 110 of the molded airbag-cover body 101. Although not shown in detail, the NC controller 220 is provided with, for example, a typical CPU (central processing unit) which, for example, inputs, computes, outputs, and stores the machining data for the molded airbag-cover body 101; a ROM; and a RAM.

In the ultrasonic machining device 200, the control operation of the drive arm 212 based on the input signal from the NC controller 220 allows a positional adjustment of the blade tip 216a of the ultrasonic machining blade 216 receiving an ultrasonic wave of a predetermined frequency generated by the ultrasonic generator 218. Consequently, this allows the ultrasonic machining blade 216 to perform a machining operation along a desired path so that the tearing line 113 can be formed on the reverse face 111 of the top panel 110 of the molded airbag-cover body 101. Thus, a molded airbag-cover body 102 obtained in this tearing-line formation process of step S12 is a molded body not yet provided with a coating, which will be given subsequently in the coating process of step S14.

According to this embodiment, the machining rate using the ultrasonic machining blade 216 is higher than that using general laser machining. For this reason, this effectively leads to higher productivity of the airbag cover. Moreover, since a general-purpose device can be used for the ultrasonic machining operation, equipment costs can be kept lower than using laser machining facilities that usually require a dedicated device. Furthermore, with respect to the size reduction of the ultrasonic machining device 200, even if the section where the tearing line 113 is to be formed is close to the supporting portion 121 of the container 120, the tearing line 113 can still be accurately formed into a desired shape.

### (Coating step)

After step S12, a coating process is performed in step S14 shown in Fig. 4. The coating process is for applying a coating onto the molded airbag-cover body 102 obtained in the tearing-line formation process in step S12. In the coating process, the molded airbag-cover body 102 is given a coating by using a typical coating unit. Since such art related with an application of a coating on the molded airbag-cover body 102 is generally known, a detail description of such art will be omitted here. A molded airbag-cover body obtained in the coating process corresponds to the airbag cover 100 according to this embodiment.

The airbag cover 100 manufactured after performing the processes of steps S10 to S14 shown in Fig. 4 has an integrated combination of the top panel 110 and the container 120. In comparison with an airbag cover in which a component equivalent to the top panel 110 and a component equivalent to the container 120 are first formed separately and are then joined together by, for example, welding, the airbag cover 100 has the following advantages.

Specifically, this manufacturing process of the airbag cover achieves a less number of components and manufacturing steps and a simplified production control, thus contributing to less time and lower costs (i.e. costs required for manufacture, quality control, and development). Furthermore, regarding the finished product of the airbag cover, the integrated combination of the top panel 110 and the container 120 contributes to a better appearance in the bordering section between the top panel 110 and the container 120; a higher stability of the top panel 110 due to the integrated junction between the top panel 110 and the container 120; a lighter product weight of the entire airbag cover 100; and a stronger junction between the top panel 110 and the container 120. In other words, in the airbag cover 100 having the integrated combination of the top panel 110 and the container 120, the strength in the junction between the top panel and the container is higher than in a case where the two are welded together. Accordingly, this achieves an airbag cover having high strength in the junction between the top panel and the container. Such an airbag cover having high strength in the junction between the top panel and the container is advantageous especially for a vehicle airbag whose inflation force is very large. Furthermore, since the molded airbag-cover body 101 having the integrated combination of the top panel 110 and the container 120 formed in the molding process described above has a higher rigidity and is thus less deformable in comparison with a single separate top-panel, the tearing-line formation process for post-processing the molded airbag-cover body 101 to form the tearing line 113 can be readily performed.

### (Alternative embodiments)

The technical scope of the present invention is not limited to the above embodiment, and modifications are permissible within the scope and spirit of the present invention. For example, the following alternative embodiments, which are modifications of the above embodiment, are permissible.

Although the above embodiment describes an example in which the tearing line 113 defined by the linear groove is post-processed in the top panel 110 of the airbag cover 100 by ultrasonic machining, the tearing line may be post-processed by alternative machining means other than ultrasonic machining in the present invention. Such alternative machining means for post-processing the tearing line may be, for example, various types of cutting tools (such as cutters and rotary blades) which are used in laser machining and cutting; thermo-blades; drills; end mills; needles, and water-jet nozzles that cut a workpiece by expelling water thereto. Furthermore, instead of a blade-like ultrasonic machining member like the ultrasonic machining blade 216, the ultrasonic machining member used for ultrasonic machining may alternatively have a rod-like structure or a plate-like structure.

Furthermore, although the above embodiment describes an example in which the tearing line 113 in the top panel 110 is formed into a substantially H-shape in plan view, the shape of the tearing line defined by the linear groove in the present invention is not limited to a substantially H-shape and may be changed in accordance with, for example, the specification of the airbag cover. As alternatives to the H-shape, other various shapes are permissible; such as a U-shape.

Furthermore, although the airbag cover 100 is manufactured in the order: the molding step, the tearing-line formation step, and the coating step according to the above embodiment, the tearing-line formation step and the coating step may alternatively be switched in the present invention. In that case, the airbag cover 100 is manufactured in the order: the molding step, the coating step, and the tearing-line formation step.

Furthermore, although the above embodiment describes an example in which the airbag cover 100 is installed in a vehicle cabin of an automobile, the molding technique of the airbag cover which is a characteristic of the present invention can be applied to various types of vehicles other than automobiles, such as trains, motorcycles (straddle-type vehicles), aircrafts, and watercrafts.

## Claims

1. A method for manufacturing an airbag cover which includes a plate-like top panel that covers a vehicle airbag from a vehicle-cabin side, a container that is disposed on a reverse face of the top panel and that houses the vehicle airbag, and a linear groove having a depth less than a panel thickness of the top panel, the method comprising:
a molding step for forming a molded airbag-cover body including an integrated combination of the top panel and the container; and
a groove-forming step for post-processing the molded airbag-cover body obtained in the molding step in order to form the linear groove.

2. The method for manufacturing the airbag cover according to claim 1, wherein the linear groove is formed by ultrasonic machining using ultrasonic machining means in the groove-forming step.
